# EUROPÄISCHE PATENTSCHRIFT

(11) **EP 1 110 446 B1**
(45) Veröffentlichungstag und Bekanntmachung des Hinweises auf die Patenterteilung: **18.02.2004**
(21) Anmeldenummer: 00125540.5
(22) Anmeldetag: 22.11.2000
(51) Int. Cl.: A01F 29/20

(54) **Trommelhäcksler**
Drum chopper
Hacheuse à tambour

(30) Priorität: 03.12.1999 DE 19958455
(43) Veröffentlichungstag der Anmeldung: 27.06.2001
(73) Patentinhaber: CLAAS Selbstfahrende Erntemaschinen GmbH, 33428 Harsewinkel (DE)
(72) Erfinder: Dykstra, Martin, 06971 Jessen (DE); Gausmann, Ludger, 49170 Hagen a. TW (DE)

(56) Entgegenhaltungen:
- EP-A- 0 761 089
- DE-A- 4 007 794
- FR-A- 2 182 096
- US-A- 3 126 931
- US-A- 3 963 183
- US-A- 4 706 899

## Beschreibung

Die Erfindung betrifft einen Trommelhacksler mit einem um eine horizontale Achse rotierbaren Grundkörper, der an seinem äußeren Umfang mit mehreren, zumindest paarweise in gleichen Abständen zueinander angeordneten Aufnahmen besetzt ist, an denen im Querschnitt schalenförmig gebogene Messer befestigt sind, deren Schneiden den äußeren Flugkreis Häckseltrommel bilden.

Ein derartiger Trommelhäcksler ist beispielsweise aus der US PS 3 126 931 bekannt. Bei diesem bekanntem Trommelhäcksler sind die einzelnen Messer kraftschlüssig mit den entsprechenden Aufnahmen verschraubt. Zu diesem Zweck weisen die im Querschnitt schalenförmig gebogenen Messer Durchgangsbohrungen auf, durch die die Befestigungsschrauben hindurchgeführt werden. Einerseits werden die Messer durch diese Durchgangsbohrungen erheblich geschwächt und andererseits entstehen im Messer durch das kraftschlüssige Verschrauben undefinierte Spannungen. Ein weiterer Nachteil einer solchen Befestigung ist darin zu sehen, daß die in die Schale der Messer hineinragenden Schraubenköpfe den Häckselgutfluß negativ beeinflussen. Desweiteren unterliegen die Schraubenköpfe durch den Häckselgutstrom einem hohen Verschleiß, da sich die Schraubenköpfe nahe der Schneidkanten befinden.

Der vorliegenden Erfindung liegt daher die Aufgabe zugrunde, einen Trommelhäcksler der eingangs näher bezeichneten Art so auszugestalten, daß die zuvor aufgezeichneten Nachteile einer bekannten Messerbefestigung vermieden werden. Dies wird nach der Erfindung dadurch erreicht, daß die einzelnen Messer formschlüssig in korrespondierender Art mit den ihnen zugeordneten Aufnahmen verbunden sind. Durch eine solche Befestigung erübrigen sich schwächende Durchgangsbohrungen im Messer selbst.

Weitere vorteilhafte Ausgestaltungen der Erfindung sind in den Unteransprüchen näher definiert.

Im folgenden soll die Erfindung anhand eines Ausführungsbeispieles und mehrerer dieses schematisch darstellender Figuren näher erläutert werden. Dabei zeigt:
- Figur 1: einen Trommelhäcksler in der Seitenansicht;
- Figur 2: einen Teil des in Figur 1 dargestellten Trommelhäckslers in vergrößerter Darstellung und
- Figur 3: den in Figur 2 dargestellten Teil des Trommelhäckslers in abgewandelter Form.

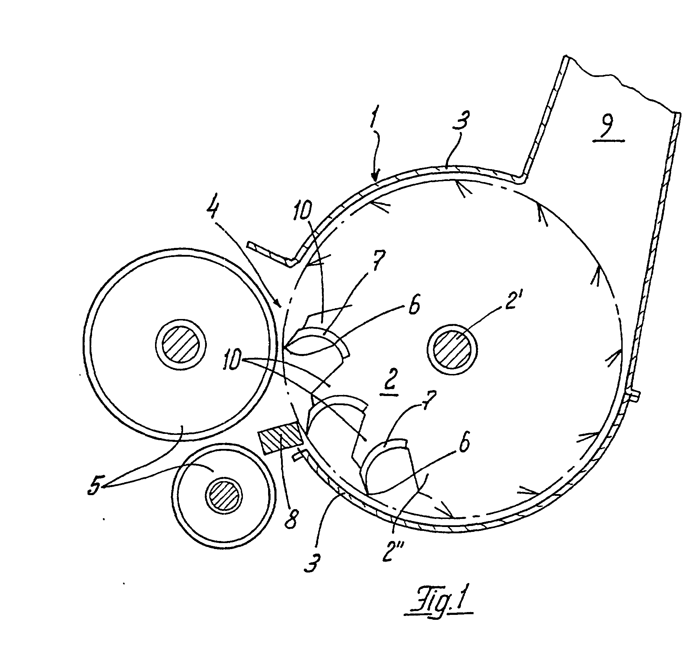

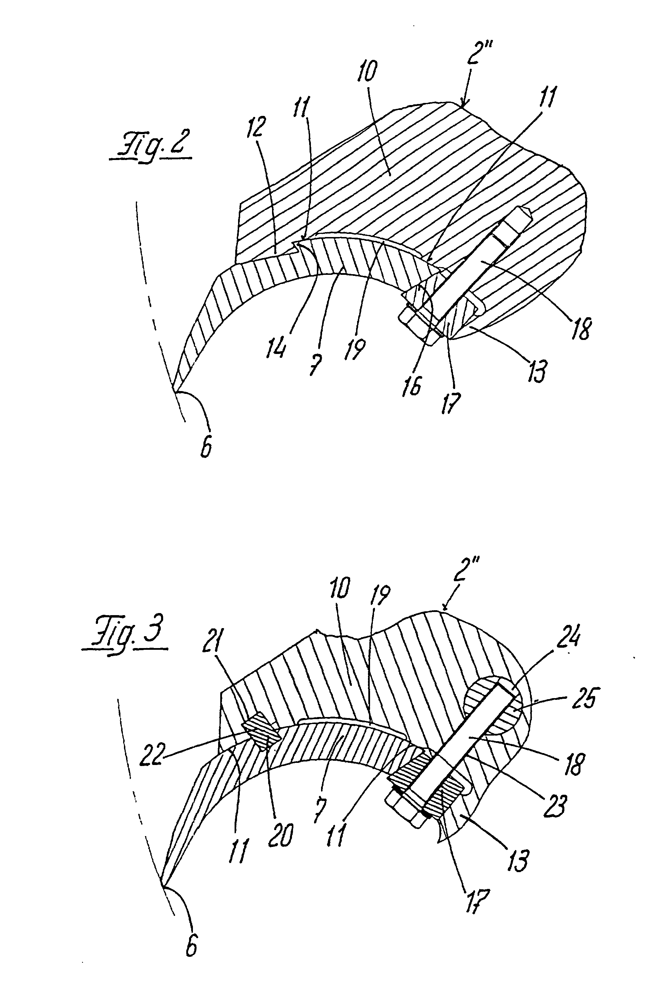

Mit 1 ist ein Trommelhäcksler bezeichnet, dessen Häckseltrommel 2 antreibbar in einem Gehäuse 3 gelagert ist. Dem Gehäuseeingang 4 sind Walzen 5 vorgeordnet, durch die das Halmgut zugeführt wird. Durch die Schneiden 6 der Messer 7 im Zusammenwirken mit dem am Gehäuse 3 verstellbar angeordneten Scherbalken 8 wird das Halmgut gehäckselt und durch den Austragschacht 9 ausgeworfen. Die Häckseltrommel 2 selbst besteht in an sich bekannter Weise aus einer Welle 2', auf der mindestens zwei scheibenförmige Trommelböden 2" befestigt sind. An ihrem Umfang sind die Trommelböden 2" profiliert ausgebildet, wodurch Aufnahmen 10 für die Messer 7 gebildet sind. Die Auflageflächen 11 dieser Aufnahmen 10 sind, wie Figur 2 zeigt, entsprechend der Form der Messer 7 schalenartig ausgebildet. Zum Zwecke der Befestigung der Messer 7 weist jede der Aufnahmen 10 im Bereich ihrer Auflagefläche 11 sowohl einen Rastvorsprung 12 wie auch einen Anschlag 13 auf. Im montierten Zustand greift eine an jedem Messer vorgesehene Nase 14 hinter den Rastvorsprung 12, wobei sich der, der Messerschneide gegenüberliegende Messerrücken 16 an einem Spannstück 17 abstützt. Dieses Spannstück 17 liegt an dem Anschlag 13 der Aufnahme 10 an. Aus der Figur 2 ist zu erkennen, daß der Messerrücken 16 einerseits und der mit diesem Messerrücken 16 korrespondierende Bereich des Spannstückes 17 Schrägflächen aufweisen. Die Spannstücke 17 werden durch Schrauben 18 mit den Aufnahmen 10 derart verschraubt, daß durch die Wirkung der Schrägflächen die Nasen 14 der Messer 7 fest gegen die Rastvorsprünge 12 der Aufnahmen gepreßt werden. Hierdurch ist eine absolut sicherer formschlüssige Verbindung der Messer 7 mit den Aufnahmen 10 gewährleistet. Aus der Figur 2 geht weiter hervor, daß die Aufnahmen 10 unterhalb der Messer 7 bereichsweise einen ausgefrästen Freiraum 19 aufweisen, um Spannungen ausgleichen zu können.

Die Figur 3 unterscheidet sich von der Ausführungsform einer Messerbefestigung nach Figur 2 dadurch, daß statt einer Nase 14 und eines Rastvorsprunges 12 sowohl im Messer 7 als auch in der Aufnahme 10 Nuten 20 und 21 vorgesehen sind, die miteinander korrespondieren und in die eine Paßfeder 22 eingelegt ist. Im Gegensatz zu der Ausführung nach Figur 2 ist die Schraube 18 nicht unmittelbar mit der Aufnahme 10 verschraubt. Sie ist vielmehr zunächst durch eine Durchgangsbohrung 23 in der Aufnahme 10 hindurchgeführt und in einen Rundstab 25 radial eingeschraubt, der in einer Querbohrung 24 der Aufnahme 10 drehbar gelagert ist.

### Bezugszeichenliste

- 1 -: Trommelhäcksler
- 2 -: Häckslertrommel
- 2': Welle
- 2": Trommelböden
- 3 -: Gehäuse
- 4 -: Gehäuseeingang
- 5 -: Walzen
- 6 -: Schneiden
- 7 -: Messer
- 8 -: Scherbalken
- 9 -: Austragschacht
- 10 -: Aufnahmen
- 11 -: Aufnahmefläche
- 12 -: Rastvorsprung
- 13 -: Anschlag
- 14 -: Nase
- 16 -: Messerrücken
- 17 -: Spannstücke
- 18 -: Schraube
- 19 -: Freiraum
- 20 -: Nut
- 21 -: Nut
- 22 -: Paßfeder
- 23 -: Durchgangsbohrung
- 24 -: Querbohrung
- 25 -: Rundstab

## Patentansprüche

1. Trommelhäcksler mit einem um eine horizontale Achse rotierbaren Grundkörper, der an seinem äußeren Umfang mit mehreren, zumindest paarweise in gleichen Abständen zueinander angeordneten Aufnahmen besetzt ist, an denen im Querschnitt schalenförmig gebogene Messer befestigt sind, deren Schneiden den äußeren Flugkreis der Häckseltrommel bilden,
**dadurch gekennzeichnet,**
**daß** die einzelnen Messer (7) formschlüssig mit den ihnen zugeordneten Aufnahmen (10) verbunden sind.

2. Trommelhäcksler nach Anspruch 1,
**dadurch gekennzeichnet,**
**daß** jede Aufnahme (10) eine Auflagefläche (11) aufweist, die der Schalenform des Messers (7) angepaßt ist.

3. Trommelhäcksler nach den Ansprüchen 1 und 2,
**dadurch gekennzeichnet,**
**daß** jede Aufnahme (10) einen Anschlag (13) und einen Rastvorsprung (12) aufweist.

4. Trommelhäcksler nach den Ansprüchen 1 bis 3,
**dadurch gekennzeichnet,**
**daß** jedes Messer (7) eine Nase (14) aufweist, die sich in eingebautem Zustand an den entsprechenden Rastvorsprung (12) fest anlegt.

5. Trommelhäcksler nach den Ansprüchen 1 und 2,
**dadurch gekennzeichnet,**
**daß** jede Aufnahme (10) und jedes entsprechende Messer (7) korrespondierende Nuten (20) und (21) aufweist, in die Paßfedern (22) eingelegt sind.

6. Trommelhäcksler nach den Ansprüchen 1 bis 5,
**dadurch gekennzeichnet,**
**daß** der Messerrücken (16) eines jeden Messers (7) an einem Spannstück (17) anliegt, welches sich an dem Anschlag (13) der entsprechenden Aufnahme (10) abstützt.

7. Trommelhäcksler nach den Ansprüchen 1 bis 6,
**dadurch gekennzeichnet,**
**daß** der Messerrücken (16) eines jeden Messers (7) und jedes Spannstück (17) mit zusammenwirkenden Schrägflächen versehen sind.

8. Trommelhäcksler nach den Ansprüchen 1 bis 7,
**dadurch gekennzeichnet,**
**daß** die Spannstucke (17) mittels Schrauben (18) in den Aufnahmen (10) gehalten sind

9. Trommelhäcksler nach den Ansprüchen 1 bis 8,
**dadurch gekennzeichnet,**
**daß** die Auflageflachen (11) der Aufnahmen (10) bereichsweise freigefräst sind, durch die Freiraume 19 gebildet werden.

## Claims

1. A drum chopper comprising a main body which is rotatable about a horizontal axis and which is occupied at its outer periphery with a plurality of receiving means which are arranged in at least pair-wise relationship at equal spacings relative to each other and to which are fixed blades which in cross-section are curved in a dish shape and the cutting edges of which form the outer circular trajectory of the chopping drum, **characterised in that** the individual blades (7) are connected in positively locking relationship to the receiving means (10) associated with them.

2. A drum chopper according to claim 1 **characterised in that** each receiving means (10) has a bearing surface (11) which is adapted to the dish shape of the blade (7).

3. A drum chopper according to claims 1 and 2 **characterised in that** each receiving means (10) has an abutment (13) and a latching projection (12).

4. A drum chopper according to claims 1 to 3 **characterised in that** each blade (7) has a nose (14) which in the installed condition bears fixedly against the corresponding latching projection (12).

5. A drum chopper according to claims 1 and 2 **characterised in that** each receiving means (10) and each corresponding blade (7) has matching grooves (20) and (21) into which are inserted fitting keys (22).

6. A drum chopper according to claims 1 to 5 **characterised in that** the back (16) of each blade (7) bears against a clamping portion (17) which is supported against the abutment (13) of the corresponding receiving means (10).

7. A drum chopper according to claims 1 to 6 **characterised in that** the back (16) of each blade (7) and each clamping portion (17) are provided with co-operating inclined surfaces.

8. A drum chopper according to claims 1 to 7 **characterised in that** the clamping portions (17) are held in the receiving means (10) by means of screws (18).

9. A drum chopper according to claims 1 to 8 **characterised in that** the bearing surfaces (11) of the receiving means (10) are milled free in region-wise manner, by which free spaces (19) are formed.

## Revendications

1. Hacheuse à tambour, comportant un corps de base qui tourne autour d'un axe horizontal et porte sur sa surface périphérique extérieure plusieurs logements disposés au moins par paires à distance constante les uns des autres, dans lesquels sont fixés des couteaux cintrés en forme de coquilles, vu en section transversale, dont les arêtes de coupe définissent l'enveloppe extérieure du tambour de hacheuse, **caractérisée en ce que** les différents couteaux (7) sont liés par complémentarité de formes aux logements (10) associés.

2. Hacheuse à tambour selon la revendication 1, **caractérisée en ce que** chaque logement (10) présente une surface d'appui (11) adaptée à la forme de coquille du couteau (7).

3. Hacheuse à tambour selon les revendications 1 et 2, **caractérisée en ce que** chaque logement (10) présente une butée (13) et une saillie d'encliquetage (12).

4. Hacheuse à tambour selon les revendications 1 à 3, **caractérisée en ce que** chaque couteau (7) présente un talon (14) qui, dans la position de montage, est appliqué fermement contre la saillie d'encliquetage (12).

5. Hacheuse à tambour selon les revendications 1 et 2, **caractérisée en ce que** chaque logement (10) et chaque couteau (7) associé présente des rainures (20) et (21) correspondantes, dans lesquelles sont montées des clavettes parallèles (22).

6. Hacheuse à tambour selon les revendications 1 à 5, **caractérisée en ce que** le dos (16) de chaque couteau (7) est en contact avec une pièce de serrage (17) qui prend appui sur la butée (13) du logement (10) concerné.

7. Hacheuse à tambour selon les revendications 1 à 6, **caractérisée en ce que** le dos (16) de chaque couteau (7) et chaque pièce de serrage (17) présentent des surfaces inclinées qui coopèrent entre elles.

8. Hacheuse à tambour selon les revendications 1 à 7, **caractérisée en ce que** les pièces de serrage (17) sont fixées dans les logements (10) par des vis (18).

9. Hacheuse à tambour selon les revendications 1 à 8, **caractérisée en ce que** les surfaces d'appui (11) des logements (10) comportent des parties fraisées en creux qui forment des dégagements (19).
